(19) Europäisches Patentamt
European Patent Office
Office européen des brevets

(11) **EP 3 106 861 A1**

(12) **EUROPEAN PATENT APPLICATION**

(43) Date of publication:
**21.12.2016 Bulletin 2016/51**

(51) Int Cl.:
*G01N 22/00* *(2006.01)*    *G01N 21/3581* *(2014.01)*

(21) Application number: **15173035.5**

(22) Date of filing: **19.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **VRIJE UNIVERSITEIT BRUSSEL**
**1050 Brussel (BE)**

(72) Inventors:
• **Pourkazemi, Ali**
**1050 Ixelles (BE)**
• **Stiens, Johan**
**2820 Bonheiden (BE)**

(74) Representative: **DenK iP**
**Leuvensesteenweg 203**
**3190 Boortmeerbeek (BE)**

(54) **CHARACTERIZATION OF MULTILAYER STRUCTURES**

(57)    A method for determining characteristics of a layer-based structure is disclosed. The method comprises repetitively irradiating the layer-based structure with a continuous wave electromagnetic radiation and capturing as a function of time a transient part of the reflection or transmission of the continuous wave electromagnetic radiation reflected or transmitted at the different interfaces of layer-based structure. The method furthermore comprises deriving from the transient part of the reflected or transmitted continuous wave electromagnetic radiation as function of time information regarding different contributions in the transient part of the reflected or transmitted continuous wave electromagnetic radiation stemming from the reflections or transmissions at different interfaces of the layer-based structure and determining from said information at least geometric information and/or electromagnetic properties of the different layers of the layer based structure. A corresponding system also is claimed.

| | First layer | Second layer | Third layer |
|---|---|---|---|
| thickness | d1 | d2 | d3 |
| permeability | μ1 | μ2 | μ3 |
| permittivity | ξ1 | ξ2 | ξ3 |
| conductivity | σ1 | σ2 | σ3 |

**FIG 1**

EP 3 106 861 A1

**Description**

**Field of the invention**

The invention relates to the field of characterization of materials. More particularly, the present invention relates to methods and systems for characterizing layer-based structures, such as multi-layer structures, in a non-destructive way.

**Background of the invention**

Characterization of materials at microwave domain is widely applied and very important for a wide range of applications. Also, accurately determining geometrical parameters and/or electromagnetic properties of layers in a Multilayer Structure (MLS) is applied widely. A large number of characterisation techniques have been proposed over the years for calculating such dielectric properties of multilayer structure or geometrical parameters. Nevertheless, study of these methods reveals that there is still need for a good characterisation technique.

Some of the existing methods are not suitable for new materials to be tested. For example, ultrasonic Testing cannot be used for rubber or soft plastic because the polymers absorb nearly all sound energy, and reflect essentially no sound waves. The mesh or fabric of a composite material so highly scatters and disperses the ultrasonic waves that an extremely noisy reflection results. Through-transmission air-coupled ultrasonic testing requires access to both sides of the sample. Radiography is generally used to detect changes in bulk density.

Under most operating conditions the most common flaw leading to failure in materials is delamination. In a delamination failure, an essentially two dimensional separation occurs between adjacent component layers. This separation between layers does not typically result in a detectable change in local density, and is therefore not detectable in a radiograph. Durometer Testing (DT) is the current state of the art for nondestructive testing of rubber parts, using a needle that penetrates a portion of the rubber and connects to a strain gauge. Durometers have poor practical utility, but they represent the best technology currently available for non-destructive testing of rubber joints.

Using of High Density Polyethylene (HDPE) is growing rapidly due to its corrosion resistance characteristics and ease of construction when compared to metal piping systems. As a result of its widespread use, a method of inspecting the piping joints is becoming essential to ensure safe, sound piping systems. This is particularly true for butt fusion joints, which can contain micro-structural defects that impact long term integrity of the piping system. These defects have proven to be difficult to detect using traditional means of inspection, such as ultrasound, because these micro-structural defects do not result in an acoustic reflector or impedance difference. Something else, in many situations, it may be neither convenient nor possible to access both sides of the material to be tested and then reflective measurement techniques are the only option.

Various methods have been employed in the past to determine the complex dielectric properties of materials from measured reflection and transmission coefficients. The most common procedure to obtain the complex permittivity ($\varepsilon$) and complex permeability ($\mu$) from S-parameters was proposed by Nicolson and Ross in 1970, and modified by Weir in 1974. It is referred to as the Nicolson-Ross-Weir (NRW) method. This method needs ultra-width band with high frequency resolution to extract relative permittivity or relative permeability for single layer. Finding characteristics of a very thin single layer of material is big challenge for this algorithm. Synthetic Aperture (SA) imaging, which is based on Frequency-Modulated Continuous-Wave (FMCW), also needs ultra-width band frequency. This method uses prior knowledge in order to have sufficient accuracy. It uses electromagnetic waves in the millimeter wave range and has a few millimeter range of depth and lateral resolution. Another method which is used for deriving geometrical and also distance information is Time Domain Reflectometery (TDR). For small size and also thin layers, electromagnetic radiation in the millimeter or THz range will be used. This method uses pulses and works based on time-of-flight which is a complex and expensive system.

Consequently, there is still need for good methods and systems for characterising layer-based systems.

**Summary of the invention**

It is an object of embodiments of the present invention to provide a method and system for detecting characteristics of a layer-based structure, such as for example a multi-layer structure.

Typical characteristics of a layer that can be determined are a layer thickness, a relative permittivity of the layer, a complex valued dielectric permittivity, a magnetic susceptibility or another electromagnetic property. In general, all parameters that have an impact on the dielectric or magnetic properties of the layers can be determined. For example, if the temperature or density dependency of the permittivity is known, it is also possible to extract temperature or density of a given structure. If these need to be determined, the structure should be known or at least a part of the structure where the temperature or density dependency should be derived should be known. Another example of a parameter may be the pressure. It is an advantage of embodiments of the present invention that such parameters can be determined for each of the different layers of a multi-layer structure, when such a multi-layer structure is under study.

It is an advantage of embodiments of the present invention that continuous waves can be used as the methods and systems providing such continuous waves are less complex than for example pulsed systems. It is an advantage of embodiments of the present invention that only the reflected signals are required.

It is an advantage of embodiments of the present invention that, for obtaining physical parameters of a layer structure, only single frequency electromagnetic waves are required and that there is no need for using different frequencies in the case of pure dielectric or pure magnetic materials. If both permittivity and permeability are unknown, two frequencies need to be used..

It is an advantage of embodiments of the present invention that the method can be applied at any frequency. It is an advantage of embodiments of the present invention that the technique can be applied in a waveguide-based system as well as in free space. The technique may in at least some embodiments be performed at a frequency in at least the range 0.1 GHz to 100 THz, e.g. at a frequency in a range between 0.1 GHz and 10 THz.. In general, the layers of the structure under investigation should be first of all at least sufficiently transparent for the used EMW such that the emitted waves can interrogate all layers from the foreside up to the backside. The wavelength of the EMW should be substantially smaller than the structure under investigation such that one can assume the principle of a propagating EMW. Finally the frequency of the EMW should not be too large, otherwise one cannot execute vector measurement

It is an advantage of embodiments of the present invention that the method is not restricted by the number of layers being present. The layers should only be sufficiently different in reflecting behavior so as to be able to detect the interface based on reflection.

It is an advantage of embodiments of the present invention that the method and systems can be applied for a variety of applications, including but not limited to piping industry, wind energy industry, automotive, biotechnology, food industry, pharmacy, etc.

It is an advantage of embodiments of the present invention that the information regarding the layers required for determining parameters using the method is limited or that the method even can be applied blindly, i.e. without input on the layers.

It is an advantage of embodiments according to the present invention that the method allows both identifying the number of layers being present as to determine characteristics of the layers.

It is an advantage of embodiments according to the present invention that the depth resolution (or layer thickness resolution) only depends on the "equivalent" time resolution, therefore allowing to optimize depth resolution by optimizing the time resolution of the setup. The "equivalent" time resolution is obtained by accurately repetitive sampling of the signal.

It is an advantage of embodiments according to the present invention that the method is independent of the wavelength used. It is sufficient that the layer-based structure is not absorbing too dominantly so that a reflection signal can be measured from the backside of the sample.

It is an advantage of embodiments according to the present invention that no transmitter signals need to be taken into account, but that the method can be used, based solely on a reflected signal.

It is an advantage of embodiments according to the present invention that the method is a contact-free method. It is an advantage of embodiments according to the present invention that the method is a non-destructive characterization method.

It is an advantage of embodiments according to the present invention that the layer-based structure may be deposited on a metal or may be backed up by a water layer.

The above objective is accomplished by a method and device according to the present invention.

The present invention relates to a method for determining characteristics of a layer-based structure, the method comprising

irradiating the layer-based structure repetitively with a continuous wave electromagnetic radiation comprising a transient part,

capturing from the repetitive irradiating as a function of time a transient part of the reflection or transmission of the continuous wave electromagnetic radiation reflected or transmitted at the different interfaces of layer-based structure,

deriving from the transient part of the reflected or transmitted continuous wave electromagnetic radiation as function of time information regarding different contributions in the transient part of the reflected or transmitted continuous wave electromagnetic radiation stemming from the reflections or transmissions at different interfaces of the layer-based structure, and

determining from said information at least geometric information and/or electromagnetic properties of the different layers of the layer based structure.

Where reference is made to a continuous wave electromagnetic radiation comprising a transient part, reference can similarly made to a transient continuous wave electromagnetic radiation.

Said deriving may comprise the deconvolution of the transient part of the reflected or transmitted continuous wave electromagnetic radiation as function of time into different contributions in the transient part of the reflected or transmitted continuous wave electromagnetic radiation stemming from the reflections or transmissions at different interfaces of the layer-based structure.

Said deconvolution may be based on using a superposition model of the different contributions in the transient part of the reflected or transmitted continuous wave electromagnetic radiation.

Said deconvolution may comprise subsequently identifying reflections at the different interfaces, whereby reflections at interfaces further away from the irradiation source are identified in a later step than reflections at interfaces closer to the irradiation source.

Said deconvolution may comprise combining contributions made by the reflection of or transmission through the layers, contributions derived from the original irradiation signal and effects caused by leakage of radiation.

Said deriving may comprise identifying different moments in time corresponding to different contributions in the transient part of the reflected or transmissions continuous electromagnetic radiation wave stemming from the reflections or transmissions at different interfaces of the layer-based structure. Identifying different moments in time may be based on identification of a discontinuity in the reflected or transmitted radiation as function of time due to an amplitude and phase shift induced by the addition of a new reflected or transmitted wave "m+1" to the superposition of already "m" received waves. Identifying different moments in time may be based on identification of sudden differences in behavior derived from comparison of a reflection or transmission based signal and the irradiation based signal. Determining from said information at least geometric information and/or electromagnetic properties may comprise determining from said different moments in time at least geometric information regarding different layers of the layer-based structure. It is an advantage of embodiments of the present invention that the resolution at which geometric information, e.g. thickness of the layers, is determined is a function of the time resolution at which the reflected of transmitted electromagnetic radiation can be detected and therefor can be improved by improving the time resolution.

Said irradiating may be irradiating with electromagnetic radiation of substantially one frequency. It is an advantage of embodiments of the present invention that a single frequency or a small frequency range around a single frequency can be used. Where reference is made to a small frequency range, reference is made to an almost monochromatic radiation with a given phase noise. The larger the phase noise, the more samples are required for properly processing the signal, e.g. via histogram smoothing, and therefore the longer one needs to measure. In some embodiments, also two or more frequencies can be used, e.g. if more parameters need to be derived, but it is an advantage of embodiments of the present invention that no wideband radiation is required.

Said method may furthermore comprise smoothing at least the reflected or transmitted continuous wave electromagnetic radiation. Smoothing can be performed using e.g. a histogram function, although embodiments of the present invention are not limited thereto.

Smoothing can also be performed on a leakage signal or a signal based on the irradiation signal, when used in the deconvolution.

Deriving from said information at least geometric information and/or electromagnetic may comprise deriving a permittivity and/or permeability of the different layers.

Said irradiating may comprise irradiating with electromagnetic radiation in the range 0.1 GHz to 10 THz.

The present invention also relates to a controller being programmed for performing a method as described above for characterization of a layer-based structure.

The present invention furthermore relates to a system for characterizing a layer-based structure, the system comprising

an irradiation system adapted for generating a repetitive continuous wave electromagnetic radiation for repetitively irradiating the layer-based structure

a receiver adapted for capturing from the repetitive irradiations as a function of time a transient part of the reflection or transmission of the continuous wave electromagnetic radiation reflected or transmitted at the different interfaces of the layer-based structure, and

a processor programmed for deriving, from the transient part of the reflected or transmitted continuous wave electromagnetic radiation as function of time, information regarding different contributions in the transient part of the reflected or transmitted continuous wave electromagnetic radiation stemming from the reflections or transmissions at different interfaces of the layer-based structure, and for determining from said information at least geometric information and/or electromagnetic properties of the different layers of the layer based structure.

The processor may comprise a deconvolution means for deconvolution of the transient part of the reflected or transmitted continuous wave electromagnetic radiation as function of time into different contributions in the transient part of the reflected or transmitted continuous wave electromagnetic radiation stemming from the reflections or transmissions at different interfaces of the layer-based structure.

The system may comprise a single shot or multi-shot sampler for sampling the transient part of the reflected or transmitted continuous wave electromagnetic radiation at a frequency of at least the repetition frequency of the emitted radiation. The sampler may be selected and configured such that the relative time resolution obtained in the overall sampled signal is sufficiently high that the thicknesses of the layers can be accurately monitored.

The irradiation system may be adapted for generating a continuous wave electromagnetic radiation at a single frequency. The system, in some embodiments, may comprise a single or double frequency generator operating in CW mode and a switch more in particular an SPST (Single-Pole, Single-Throw) switch with a power divider in between

In some embodiments, the power divider may receive a leaked signal for the signal generator and waves partially reflecting on the SPST switch. In steady state all signals received by the power divider may feature the same frequency components as the frequency components from the signal generator. At the moment the SPST is switching from on-to-off or vice versa, the signal reflected on the SPST switch may comprise also all harmonics of the transient state of the switch. By providing a filter behind the power divider passing only the latter spectral components, the filtered signal can be used for accurately sampling the reflected transient part of the continuous wave electromagnetic radiation, illustrating one example of a hardware configuration that can be used.

The system may comprises a timing means for controlling the timing of the sampling of the reflected or transmitted transient part of the continuous wave electromagnetic radiation such that the transient part of the reflected or transmitted continuous wave electromagnetic radiation is sampled with a high time-resolution. Such a timing means may comprise one or more of a triggering means and/or switching means.

Such a timing means may comprise a delay creator. Such a delay creator may be a tunable delay creator. The irradiation source may comprise a transmitter antenna. The receiver may comprise a receiver antenna.

The system may comprise a filtering or smoothing means for filtering or smoothing the signals used in the processing.

The present invention also relates to a computer program product for, when executed on a processor, determining characteristics of a layer-based structure, the computer program product being programmed for

receiving information of a repetitive irradiation of the layer-based structure with a continuous wave electromagnetic radiation,

receiving information of the capturing as a function of time of a transient part of the reflection or transmission of the continuous wave electromagnetic radiation reflected or transmitted at the different interfaces of the layer-based structure, the computer program product furthermore being programmed for deriving from the transient part of the reflected or transmitted continuous wave electromagnetic radiation as function of time, information regarding different contributions in the transient part of the reflected or transmitted continuous wave electromagnetic radiation stemming from the reflections or transmissionsat different interfaces of the layer-based structure, and for determining from said information at least geometric information and/or electromagnetic properties of the different layers of the layer based structure.

The present invention also relates to a data carrier comprising a computer program product as described above, encoded thereon.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.


Brief description of the drawings


FIG. 1 illustrates an irradiation configuration comprising an antenna for irradiating a three-layer structure as can be used in an embodiment of the present invention.

FIG. 2 provides a schematic illustration of the propagation multi-pathways of an EM wave incident on a multi-layered structure and partially bouncing forth and back between the various interfaces, as is used in an embodiment according to the present invention.

FIG. 3 provides a schematic illustration of the time evolution of the EM wave being reflected on the various interfaces of the multi-layer structure, as used in embodiments according to the present invention.

FIG. 4 illustrates a schematic representation of a system according to an embodiment of the present invention.

FIG. 5 illustrates an exemplary hardware as can be used for performing the transient radar method according to an embodiment of the present invention.

FIG. 6 illustrates a cross section of a three layer structure as studied using a method according to an embodiment of the present invention.

FIG. 7 illustrates an overview of the different steps of an exemplary method for determining the thicknesses and the complex permittivity for three layer structures, according to an embodiment of the present invention.

FIG. 8 illustrates identification of the nose of the signal being the initial signal that is detected by the receiver, as can be used in an embodiment according to the present invention.

FIG. 9 illustrates comparison different components derived from the reflected continuous wave electromagnetic radiation and identifies a point in time where the different components show a different behaviour, identifying a relevant point in time at which an additional reflection contribution occurs, as can be used in embodiments according to the present invention.

FIG. 10 illustrates a phase jump as can be taking into account when applying a method according to an embodiment of the present invention.

FIG. 11 illustrates a schematic representation of an exemplary method for taking into account phase change and attenuation for the reflected signal for finding a best match between different signals used in the processing according to an embodiment of the present invention.

FIG. 12 illustrates different signals used in the processing for deriving a further moment in time representative of an additional reflection contribution, as used in a method according to an embodiment of the present invention.

FIG. 13 illustrates a schematic representation of an exemplary method for taking into account delay, phase and attenuation in the processing according to an embodiment of the present invention.

FIG. 14 illustrates a number of components in the signals used for determining relevant moments in time at which additional reflection contributions occur, as can be used in embodiments according to the present invention.

FIG. 15 and 16 illustrate different signals used in the processing for obtaining geometric and/or EM properties of an exemplary single layer structure, illustrating features of embodiments of the present invention.

FIG. 17 illustrates the different paths that occur for reflection at a single layer.

FIG. 18 illustrates an example of an electromagnetic wave with transient part, as can be used in embodiments according to the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Whereas embodiments of the present invention have been described with reference to detection of the reflected signal, it will be clear to the person skilled in the art that, according to the same principles, the method and systems can equally be developed for transmission measurements and consequently transmission-based methods and systems are also envisaged. Such methods and systems can make use of the different transmitted portions of the electromagnetic radiation, transmitted at the different interfaces of a layer-based structure. Detection typically can be done using a receiver positioned at the opposite side of the layer-based structure.

Where in embodiments according to the present invention reference is made to a layer-based structure, reference is made to a system comprising at least one layer. Embodiments of the present invention are especially useful for characterising a structure comprising multiple layers, also referred to as multi-layer structure (MLS), whereby parameters of the different layers can be derived.

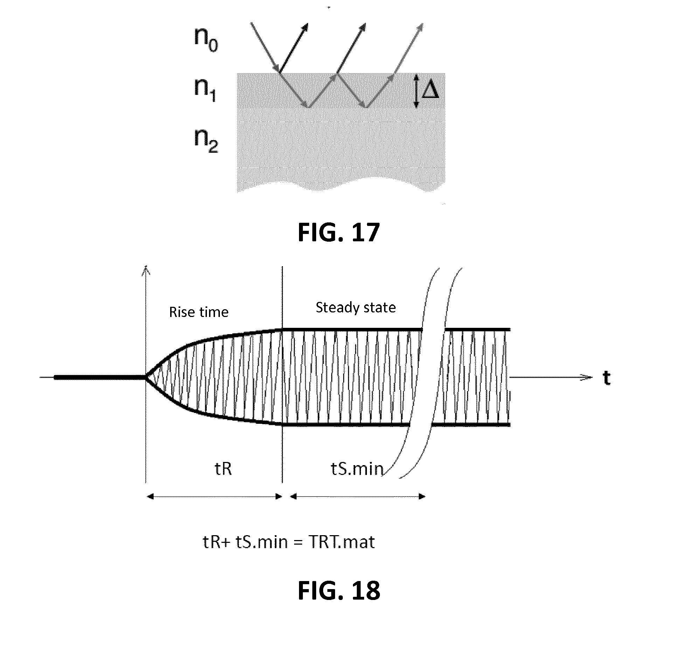

Where in embodiments of the present invention reference is made to continuous wave radiation reference is made to an electromagnetic wave switched on from zero to a monochromatic steady-state wave as illustrated in FIG. 18, in principle with a duration tR + tS.min at least equal to the full round trip time TRT.mat of the radiation inside the multilayer structure under investigation, in contrast to pulsed radiation.

According to embodiments of the present invention, the initial reflection of the continuous wave radiation is captured, i.e. the transient part of the reflection of the continuous wave radiation is captured. Such a transient part, starts from zero where no reflection is measured yet till the measured reflection reaches steady state, and all contributions of reflections at the interfaces between all the layers have reached the receiver.

Where in embodiments reference is made to the deconvolution of a signal, reference is made to splitting of a signal or wave in different contributions. Such deconvolution typically may be performed to distinguish the contributions of different reflections at the different interfaces of the different layers.

According to a first aspect of the present invention, a method is provided for determining characteristics of a layer-based structure. The method is especially suitable for identifying geometrical and/or electromagnetic properties of multiple layers in a multiple layer structure, although also properties of a single layer can be determined using the method. According to embodiments of the present invention, the method comprises irradiating the layer-based structure repetitively with a continuous wave electromagnetic (EM) radiation comprising a transient part, and capturing a transient part of the reflected continuous wave electromagnetic radiation (EM) reflected at the different interfaces of the layer(s) of the layer-based structure.

Capturing the transient part of the reflected or transmitted continuous wave electromagnetic (EM) radiation as function of time thereby comprises capturing of the reflected or transmitted signal from zero intensity, i.e. when the first reflected component of the reflection or transmission has not yet reached the receiver, up to the moment a steady state reflection is received at the receiver, comprising all contributions of the reflection or transmission at the different interfaces of the layer(s) in the layer-based structure. In order to obtain a good time resolution, the capturing of the transient part may be performed by single or multiple shot sampling of the reflection or transmission of the repetitive irradiation with the continuous wave electromagnetic radiation. In other words, repetitive irradiation with continuous wave EM radiation can be performed, whereby the irradiation each time is performed until the reflected or transmitted signal reaches steady state, the repetitive irradiation allowing to subsequently sample during the repetitive irradiations different points in time of the reflected or transmitted signal. Since the transition over time from no reflection or transmission to steady state reflection or transmission by the full layer-based structure is to be studied, the repetitive irradiation should also comprise a transient part from no irradiation to steady state CW radiation. Embodiments of the present invention furthermore comprise, deriving from the transient part of the reflected or transmitted continuous wave EM radiation as function of time, information regarding the different contributions in the transient part of the reflected or transmitted continuous wave electromagnetic radiation stemming from the reflections or transmissions at different interfaces of the layer(s) in the layer-based structure. Deriving information thereby may comprise identifying discontinuities in the reflected or transmitted radiation as function of time, e.g. due to an amplitude and phase shift induced by the addition of a new reflected, reflected or at an interface positioned further away to the receiver, to the signal representative of already received reflection waves at the receiver. It thus may comprise deriving timing information regarding when a certain component in the reflection signal is received at the receiver. The method thereby is based on the time of flight principle, taking into account that reflection at interfaces of layers being positioned further away from the receiver will require a longer time to reach the receiver than reflection at interfaces of layers being positioned closer to the receiver. It may comprise deconvolution of the reflected continuous wave electromagnetic radiation to identify the different contributions. The model used when performing the deriving may be a superposition based model, whereby the different contributions are superposed to form the overall signal.

Embodiments of the present invention also comprises determining from said information at least geometric information and/or electromagnetic properties of the different layers of the layer based structure. The geometric information may for example be determined based on a time of flight calculation for the different components in the transient part of the reflected continuous wave EM radiation. Electromagnetic properties can be determined based on the different reflection or transmission components identified in the transient part of the reflected or transmitted continuous wave EM radiation. Such electromagnetic properties may be a permittivity or permeability, but more generally may be any parameter influencing the dielectric properties or magnetic properties of one or more or all of the layers in the layer-based structure. It is to be noticed that in particular embodiments the method is based on reflection of the continuous wave.

By way of illustration, embodiments of the present invention not being limited thereto, the method is further described with reference to a 3-layer structure. Nevertheless, it will be clear to the person skilled in the art that embodiments of the present invention are not limited thereto. More particularly, methods and systems according to embodiments of the present invention can be used independent of the number of layers that are present, e.g. for at least 1 layer, at least 2 layers, at least 3 layers, at least 5 layers, at least 7 layers, etc.

Using the transient time response method, the different characteristics of the three layers in the multi-layer structure of the present example, such as thickness and complex permittivity can be determined. In the example it is supposed that the conductivity for all layers are zero and the relative permeability for all layers are one. The model used in the present example is based on superposition.

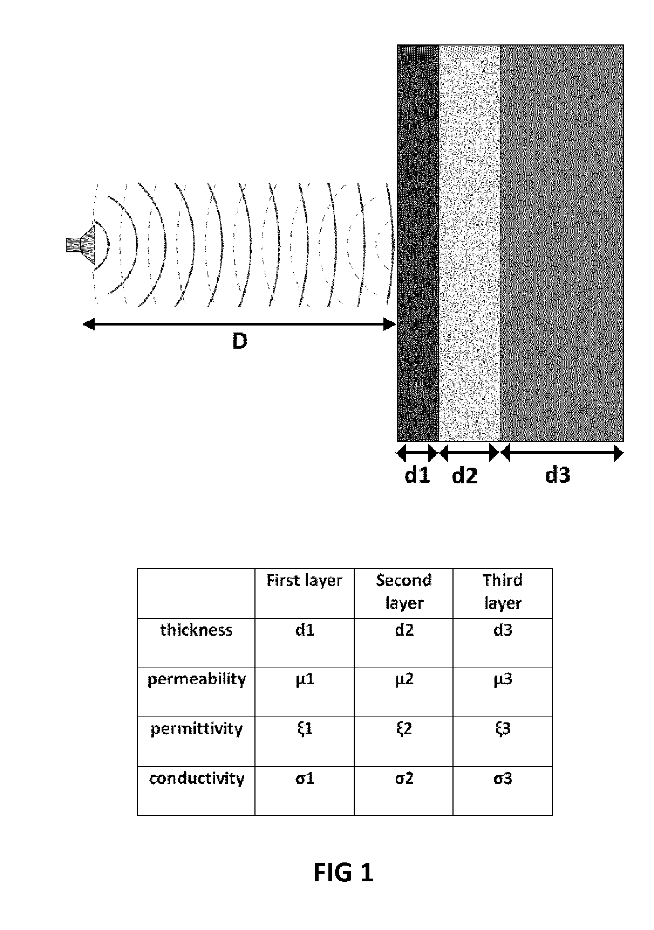

The setup used in the present example is similar as the one shown in FIG. 1. Electromagnetic (EM) waves are launched from an antenna towards the three-layer structure under investigation. FIG. 1 illustrates such a three-layer structure and an emitting and receiving antenna positioned at a distance D with respect to the three layer structure. The different geometric and EM properties that could be derived are shown in the table.

Once the EM wave launched towards the three-layer structure hits the front side of the first layer, the EM energy will be divided into three parts: one part will be reflected, one part will be transmitted and one part will be absorbed. The amount of energy in the different parts will depend on the characteristics of the layer structure. The reflected energy, reflected at each of the three layers, is returned to the receiver antenna as a scattered wave. When a continuous wave is irradiated to the structure, a continuous wave signal is received in the antenna except for these moments in time that are representative of reflected wave contacts at interfaces. Furthermore, characteristics measured characteristics also can illustrate that the wave shows a jump to another phase and amplitude which is depending on the interface characteristics of the interface between the layers. Since in a layer-based structure, the reflection at different interfaces of and between the layers will result in a different contribution to the overall reflection signal, these different reflections, which thus can be identified in the reflection signal will contain information of the different layers.

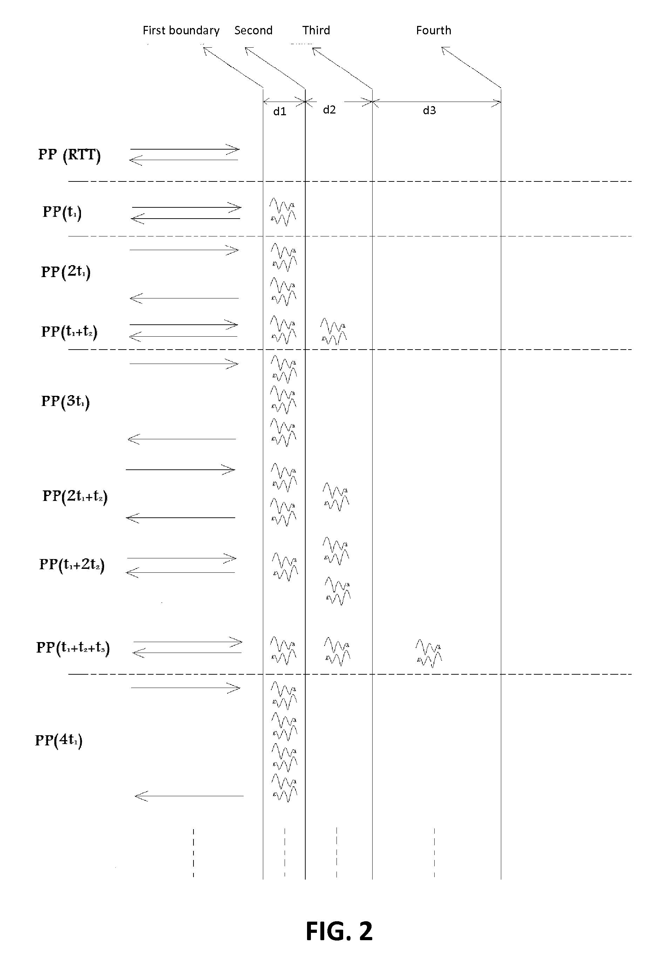

In FIG. 2, the reflected wave that is started after Round Trip Time (RTT) is shown. The different components are shown and their propagation in the different layers are indicated. Reflection of the wave will continue as long as the signal generator is irradiating. Any Propagation Path (PP) illustrates a specific path. These paths are determined by unique equations that create some boundary conditions with respect to each other. For example Propagation Path (Round Trip Time), PP (RTT) is the first path that is received in sampler. PP (t1) is the second path, corresponding with reflection at the interface between the first and second layer. Further additional reflection signals are PP (2t1) or PP (t1+t2), whereby PP (2t1) corresponds with a wave travelling twice between the interfaces of the first layer and whereby (t1+t2) corresponds with a wave travelling through the first and the second layer and then returning through the second and the first layer to the receiver. Which one of PP (2t1) or PP (t1+t2) is sooner, depends on the electrical characteristics and thicknesses of first and second layers. After that the rest paths starts to reflect and so on. After a short time, the captured reflection signal goes to the steady state. TRM can extract all of geometric and electromagnetic characteristic of the multi-layer structure by using transient time signal.

The method allows to extract blindly the dielectric characteristics of the individual layers of the multi-layers structure from the transient reflection curve. According to assumptions described above, one still have six parameters to determine, as illustrated in FIG.1: the thickness and complex valued permittivity of each layer. The following basic rules are applied for the analysis: 1) the total reflected wave has been collected from all of these paths and the reflected wave follows the superposition rule. 2) PP (RTT) and PP (t1) are unique and they will be reflected respectively. After that PP (t1+t2) and PP (2t1) reflections are captured, although it is not clear which reflection occurs first. Nevertheless, PP (2t1) can be calculated immediately after detecting PP (t1). So after capturing transient signal and also detecting PP (RTT) and PP (t1), distinguishing PP (2t1) from PP (t1+t2) can be done easily. After that some other paths start to reflect such as PP (nt1+t2), PP (t1+nt2), PP (nt1+mt2), PP (t1+t2+t3), $n \in N$ and so on. The vital condition that is to be mentioned is that capturing must be done from the time where there is no reflection because the Nose of the curve allows to determine the first layer reflection coefficient and also t1. After rewriting some equations it can be demonstrated that by using two frequencies f1 and f2 (f1≠f2) one can find these nine parameters uniquely (See figure1). It means that one can calculate complex permeability, complex permittivity and also individual thickness for three layers structure.

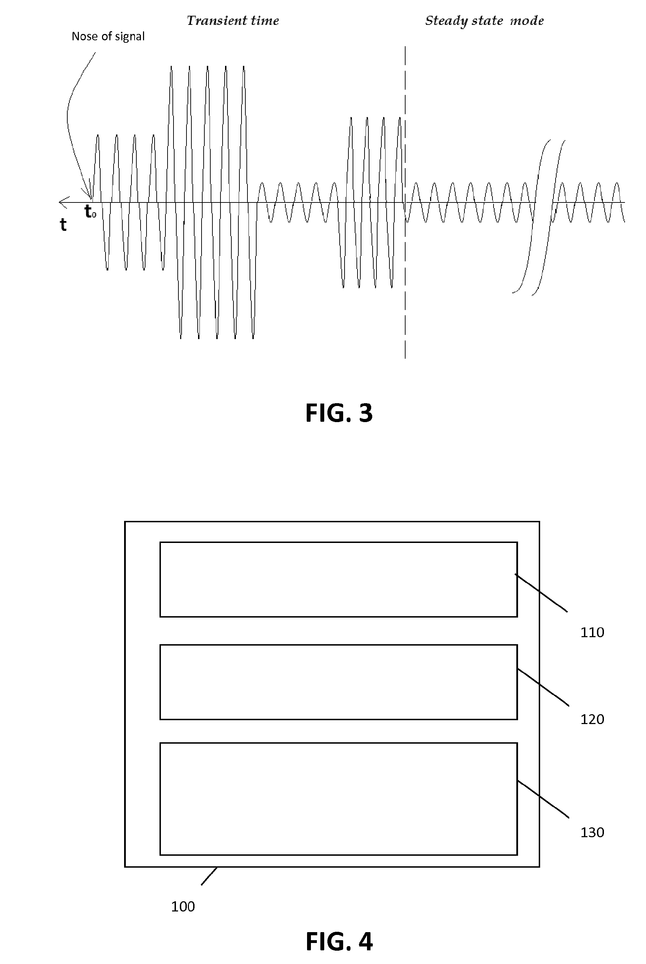

FIG. 3 illustrates the overall reflected signal illustrating a transient part and a steady state part in the reflected continuous wave EM radiation as function of time. The nose of the signal identifies the first reflected component received in the receiver, typically corresponding with the reflection at the surface of the first layer in the layer-based structure facing the emitter and the receiver. It is to be mentioned this curve shows a transient state and after a sufficient superposition of the multiple reflected waves on the various interfaces, the steady state reflection coefficient of the multi-layer structure is reached. Hence we get again a one monochromic sinusoidal curve, with an amplitude and phase determined by the steady-state reflection coefficient of the multi-layer structure.

In a similar way, in transient regime, the reflection coefficient on a single layer, an example shown in FIG. 17, converges gradually from the front surface reflection coefficient $r_{01}$ in discrete steps after each round trip "m" towards the steady-state slab reflection coefficient $r_{slab}$. The steady state slab reflection coefficient is given by the following equation :

$$r_{slab} = r_{01} + t_{01} t_{10} r_{12} p^2 \sum_{m=0}^{\infty} \left( r_{10} r_{12} p^2 \right)^m$$

$$= r_{01} + t_{01} t_{10} r_{12} p^2 \frac{1}{1 - r_{10} r_{12} p^2}$$

wherein $r_{01}$ is the reflection coefficient at the interface of the air with layer for incidence from the air side, $r_{12}$ is the reflection coefficient at the interface between the layer and the substrate (medium with refractive index n2), $r_{10}$ is the reflection coefficient for waves incident on the interface between the layer and air, for incidence from the layer side, and $t_{01}$ and $t_{10}$ are the transmission coefficient at the interface air/layer for incidence from air respectively layer side.

Further features and advantages will be illustrated further below, when referring to the different examples.

In a second aspect, the present invention also relates to a system for characterizing a layer-based structure. The system may be especially suitable for performing a method as described in embodiments of the first aspect, but is not limited thereto. According to embodiments of the present invention, the system typically comprises an irradiation system adapted for generating a repetitive continuous wave electromagnetic radiation comprising a transient part for repetitively irradiating the layer-based structure. The irradiation system may for example be an emitting antenna. The irradiation system may in one example be an irradiation source working in continuous wave mode combined with a switch so as to generate the repetitive transient irradiation signal, comprising a transition from 0 intensity to a steady state continuous mode. In an alternative example, the irradiation source may be switched on and off repetitively, but this may result in a less stable irradiation signal. The irradiation source may be adapted for operating at a single frequency or a narrow range around a single frequency. In case more electromagnet properties need to be derived, an irradiation source emitting at two or more frequencies or a plurality of irradiation sources emitting at different frequencies may be used, in order to derive more information. The irradiation source typically is not a broadband irradiation source. The irradiation frequency may be determined based on the application envisaged, i.e. the radiation should not be absorbed too strongly by the structure under study and the wavelength should be substantially smaller than the dimensions of the structure under study. An example of a range of frequencies for radiation that can be used in at least some applications is 1 GHz to 10THz.

The system also comprises a receiver adapted for capturing from the repetitive irradiations as a function of time a transient part of the reflection or transmission of the continuous wave electromagnetic radiation reflected or transmitted at the different interfaces of the layer-based structure. Such a receiver may comprise a receiving antenna. In one example, such a receiver may be based on a sampling system for single shot or multiple shot sampling for sampling the transient part of the reflected or transmitted continuous wave electromagnetic radiation at a frequency of at least the repetition frequency of the emitted radiation. Such a sampler may be selected and configured such that the relative time resolution obtained in the overall sampled signal is sufficiently high that the thicknesses of the layers can be accurately monitored. The sampler may for example be a sampling scope uniquely designed to capture, display and/or analyze repetitive signals. Triggering capabilities are likewise crafted for repetitive signals. A sampling scope captures a set of non-contiguous samples spaced in time when it sees its first trigger condition. The scope delays the trigger point, captures the next set of points, and places them on its display with the first set of points. It repeats this process, building up the waveform in an infinite-persistent mode over successive acquisitions. The precision in the amount of time from the first trigger condition to a next trigger condition delayed slightly from the first determines the accuracy.

According to embodiments of the present invention, the system furthermore comprises a processor programmed for deriving, from the transient part of the reflected or transmitted continuous wave electromagnetic radiation as function of time, information regarding different contributions in the transient part of the reflected or transmitted continuous wave electromagnetic radiation stemming from the reflections or transmissions at different interfaces of the layer-based structure. The processor may for example comprise a deconvolution unit for the deconvolution of the transient part of the reflected or transmitted continuous wave electromagnetic radiation as function of time into different contributions in the transient part of the reflected or transmitted continuous wave electromagnetic radiation stemming from the reflections at different interfaces of the layer-based structure. The processor may comprise a filtering or smoothing means for filtering or smoothing the signals used for processing. Such smoothing may in one example be based on a histogram function, although embodiments are not limited thereto. The processor may be programmed for taking into account a superposition model for the received reflection of the continuous wave electromagnetic radiation.

The processor furthermore comprises a means for deriving, from the obtained information, geometrical and/or electromagnetic properties of the different layers in the layer-based structure. The latter may for example be based on a time of flight model. In some embodiments, the system may be adapted for using the reflection of the continuous wave electromagnetic radiation.

By way of illustration, FIG. 4 illustrates a schematic representation of some essential components of the system. The system 100 comprises an irradiation source 110, a receiver 120 and a processor 130.

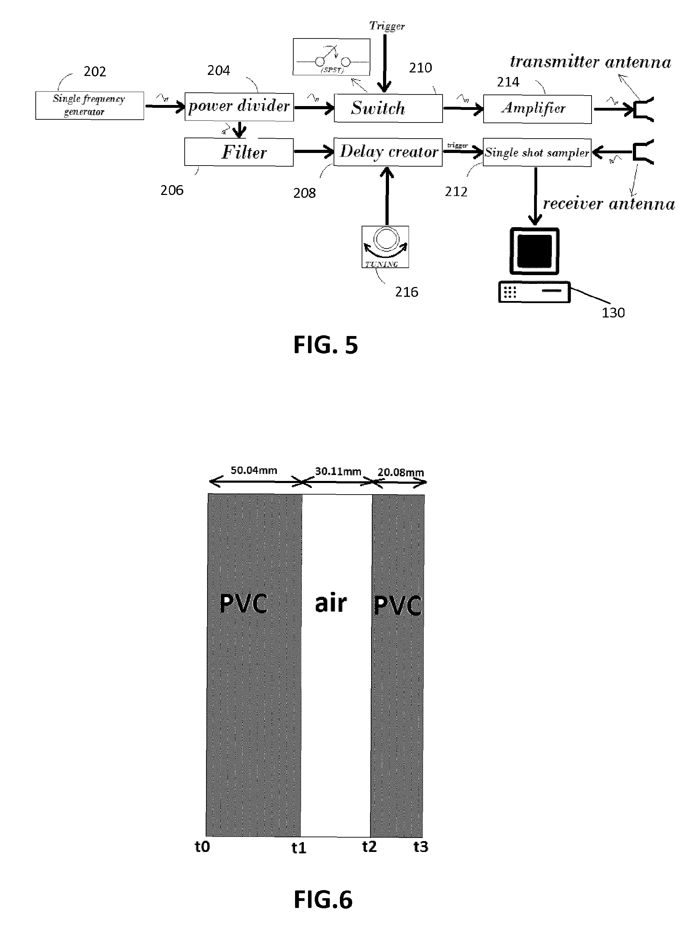

FIG. 5 illustrates an exemplary system of an embodiment according to the present invention. The system comprises an irradiation system comprising a single frequency generator 202, a power divider 204, an ON/OFF switch 210 for controlling repetition of the irradiation source and an amplifier 214 for amplifying the signal before it is delivered to a transmitter antenna for irradiating the layer-based structure. The system also comprises a receiver system, using a part of the irradiation signal for controlling the sampling of the received reflected signal. The latter is obtained through the power divider 204. The receiver system comprises a filter 206, a delay creator 208, controlled by a tuning means 216, for creating the appropriate delay for accurately sampling, and a sampler, e.g. a single shot sampler 212, sampling the reflected signal received from the receiver antenna. The sampled result is then processed in the computer 130. It is to be understood that the system shown only is an example of a system according to an embodiment of the present invention and that the present invention is not limited thereby.

In one aspect, the present invention also relates to a controller for performing a method as described in embodiments of the first aspect of the present invention. The controller may be implemented in software or hardware. Features and advantages may correspond with a feature or step of a method according to an embodiment of the first aspect.

In yet another aspect, the present invention also relates to a computer program product for, when executed on a processor, determining characteristics of a layer-based structure. Such a computer program product may be programmed for

receiving information of a repetitive irradiation of the layer-based structure with a continuous wave electromagnetic radiation comprising a transient part, and

receiving information of the capturing as a function of time of a transient part of the reflection or transmission of the continuous wave electromagnetic radiation reflected or transmitted at the different interfaces of the layer-based structure,

The computer program product furthermore is programmed for deriving from the transient part of the reflected or transmitted continuous wave electromagnetic radiation as function of time, information regarding different contributions in the transient part of the reflected or transmitted continuous wave electromagnetic radiation stemming from the reflections or transmissions at different interfaces of the layer-based structure, and for determining from said information at least geometric information and/or electromagnetic properties of the different layers of the layer based structure. The computer program product may be stored on a processor. One configuration of such a processor may for example include at least one programmable computing component coupled to a memory subsystem that includes at least one form of memory, e.g., RAM, ROM, and so forth. It is to be noted that the computing component or computing components may be a general purpose, or a special purpose computing component, and may be for inclusion in a device, e.g., a chip that has other components that perform other functions. Thus, one or more aspects of the present invention can be implemented in digital electronic circuitry, or in computer hardware, firmware, software, or in combinations of them. For example, each of the method steps may be a computer implemented step. Thus, while a processor as such is prior art, a system that includes the instructions to implement aspects of the methods for determining properties of a layer-based structure is not prior art. The present invention thus also includes a computer program product which provides the functionality of any of the methods according to the present invention when executed on a computing device.

In another aspect, the present invention relates to a data carrier for carrying a computer program product for characterising a layer-based structure. Such a data carrier may comprise a computer program product tangibly embodied thereon and may carry machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

Further by way of illustration, some features and advantages of embodiments of the present invention are illustrated, by comparing the transient radar method with a Nicolson-Ross-Weir retrieval method. The Nicolson-Ross-Weir (NRW) retrieval method is based on the inversion of the Fresnel-Airy formulas expressing the normal reflection and transmission coefficients of a material layer through the wave impedance of the medium and its refraction index. Through the wave impedance and the refraction index, one can find the medium permittivity and permeability (for anisotropic media - tangential components of the permittivity and permeability tensors). In the following, permittivity obtained by the two methods is compared for two kinds of material which are PVC and Teflon using irradiation at a frequency near 10 GHz respectively.

Returning first to the NRW method for calculating permittivity:

Using the NRW method, if one has the S parameter S11 and also the S parameter S21 for a unique frequency, by following formulas, the permittivity for nonmagnetic materials can be achieved.

$$k = \frac{S_{11}^2 - S_{21}^2 + 1}{2 S_{11}} \qquad (1)$$

$$\Gamma = k \pm \sqrt{k^2 - 1} \qquad (2)$$

For selecting plus or minus in equation (2), one can select any F which has this condition $|\Gamma| <= 1$.

$$Z = \sqrt{\frac{\mu}{\varepsilon}} = \frac{1 - \Gamma}{1 + \Gamma} \qquad (3)$$

For the samples in the present example $\mu_r = 1$ so one has

$$\varepsilon_r = \left(\frac{1 - \Gamma}{1 + \Gamma}\right)^2 \qquad (4)$$

In the following table, both results obtained by the two methods for the same materials (PVC and Teflon), are shown, as well as comparison with literature values. The results obtained by the NWR method are only for permittivity. Using the Transient radar method, calculation was done simultaneously for permittivity and thickness.

Table 1. Comparison between results of NRW and TRM

| Material | Frequency (GHz) | Method | permittivity | Error (%) | Thickness (mm) obtained | Thickness (mm) Real | Error (%) | Time (ms) |
|---|---|---|---|---|---|---|---|---|
| PVC | 10.08 | Transient radar | 2.54+0.15i | 14 | 106.30 | 103.00 | 3 | 51 |
| PVC | 10.08 | NRW | 2.38+0.55i | 33 | ---------- | 103.00 | ---------- | 69 |
| PVC | Around 10.08 | Literature | 2.83+0.03i | reference | ---------- | 103.00 | ---------- | ---------- |
| Teflon | 10.08 | Transient radar | 1.98+0.06i | 5 | 19.83 | 19.00 | 4 | 30 |
| Teflon | 10.08 | NRW | 1.95+0.4i | 23 | ---------- | 19.00 | ---------- | 66 |
| Teflon | Around 10.08 | Literature | 2.05+01i | reference | ---------- | 19.00 | ---------- | ---------- |

The results illustrate that an accurate determination of geometric and electromagnetic properties can be obtained using the transient radar method according to an embodiment of the present invention.

Furthermore by way of example, some practical results for the transient radar method for a three layer structure and for a single layer structure are discussed below.

In one particular example, the transient radar method is applied to a three layer structure. Geometrical parameters as well as the relative complex permittivity are obtained for the three layer structure as shown in FIG. 6, using a single frequency electromagnetic wave. The three layer structure studied in the present example has a first and third layer being a PVC whereas the middle layer is air.

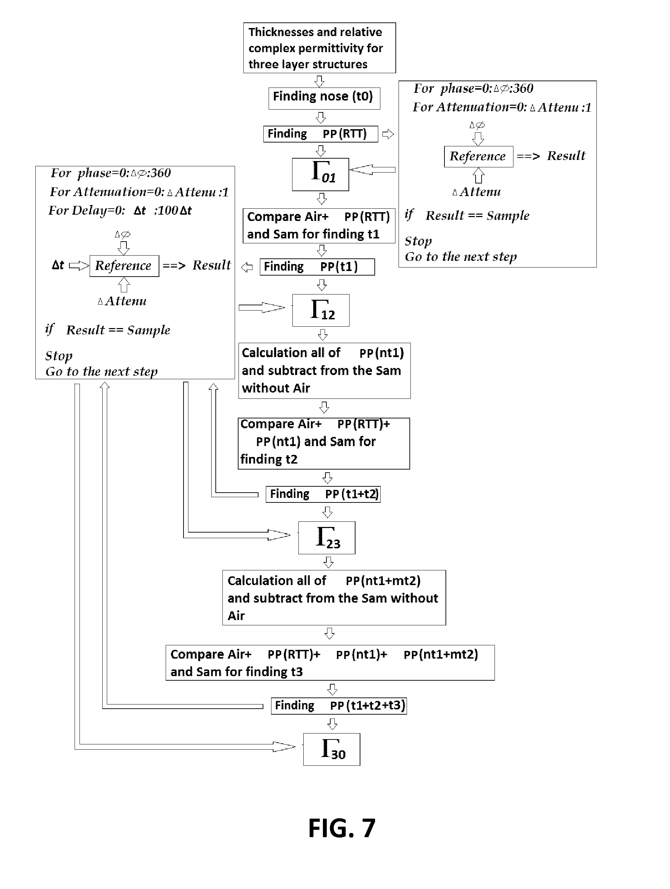

By way of illustration, the different steps that can be applied for finding a solution for the three layer structure are described below. An overview of the different steps applied in the method are shown in FIG. 7.

In a first calibration step, the signals of empty space or air and a calibration reflector positioned at exactly the same position as the sample under test are measured. For simplicity "Ref" is used as a name for the reflected signal from a calibration reflector, **"Air"** is used as a name for the reflected signal from air and yields information about the antenna cross-talk. After the calibration steps the time evolution of the reflection signal from the sample positioned exactly at the position of the calibration reflector are recorded. "Sam" is used as a name for the reflected signal from the sample under study. All these three signals have been smoothed.

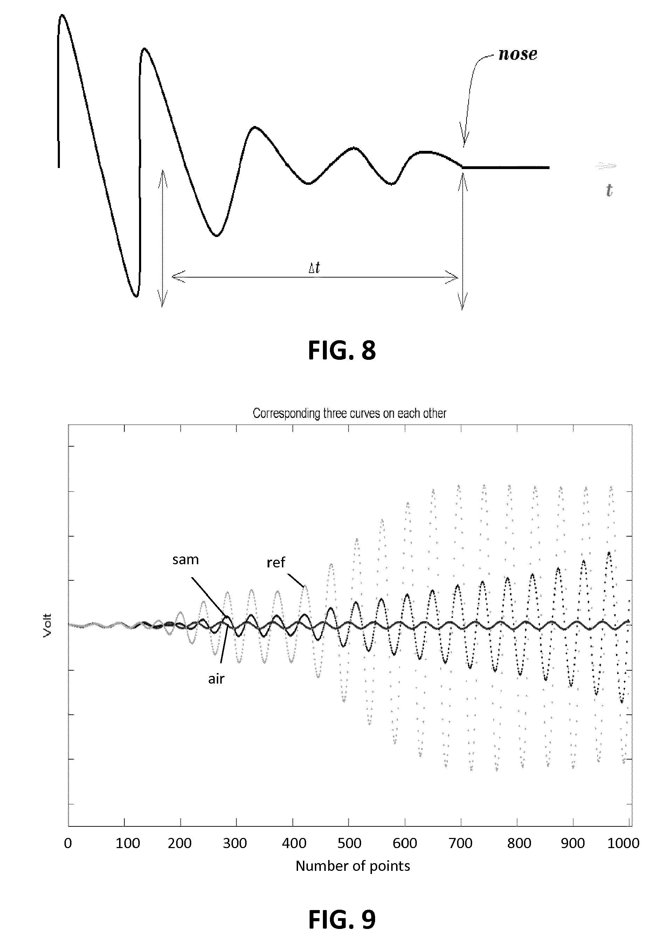

In a second step, the three signals are correlated to find the initial point in the reflected signal representative of the moment where the irradiation beam hits the front side of the reflecting material, also referred to as the nose of the signal. The corresponding moment in time is referred to as $t_0$ The nose is illustrated in FIG. 8. The correlation of the different signals is shown in FIG. 9. From this correlation, a point is traced where "Ref" and "air" start to deviate from each other.

In step 3, the leakage between the "air" signal is subtracted from the "ref" signal and the "sam" signal, thus obtaining the following signals:

$$\text{“Ref\_without\_air”} = \text{“ref”} - \text{“air”}$$

$$\text{“Sam\_without\_air”} = \text{“sam”} - \text{“air”}$$

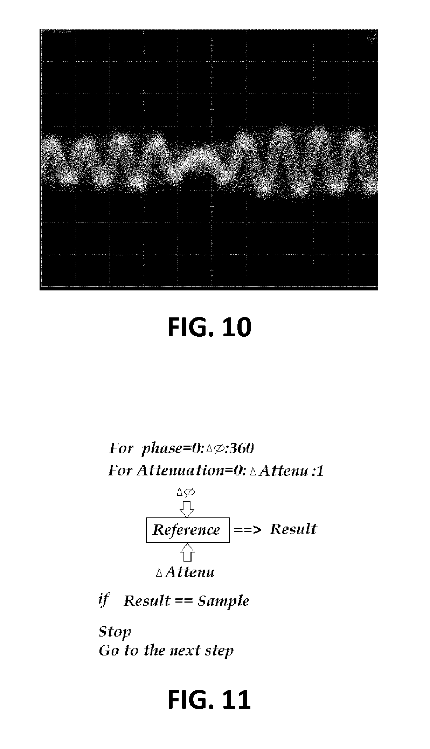

The signals "ref_without_air" and "sam_without_air" can correspond exactly with each other from a certain moment in time (the nose) provided a phase and attenuation correction are applied to the "Ref_without_air" signal. The signal corrected for phase and attenuation is referred to as $PP(RTT)U(t)$. In this signal $U(t)$ corresponds with the step pulse illustrating some delay for a Propagation Path (PP). It is to be noticed that phase jumping can be observed directly near the nose. Phase jumping will occur several times but only the first phase jump can be observed directly. The latter is illustrated in FIG. 10. FIG. 11 illustrates the algorithm used for applying phase and attenuation correction used for finding the best match between "Ref_without_air" and "Sam_without_air" from the nose onwards.

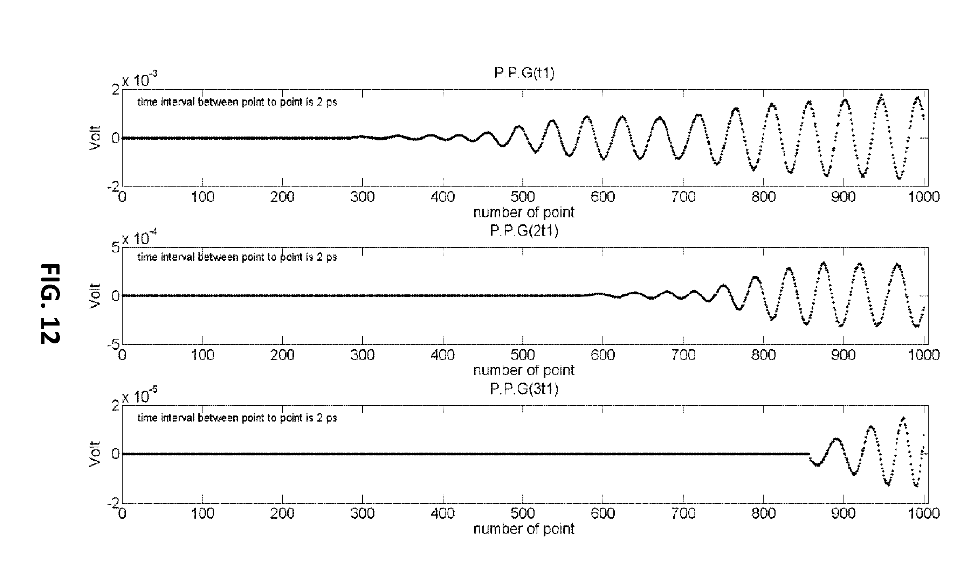

In step 3, $PP(RTT)$ was found. In step 4, $\Gamma_{01}$ can be calculated immediately. Further, the signal Air and $PP(RTT)$ can be combined with each other, and a new common point can be found where the signals Sam and Air+ $PP(RTT)$ start to be separated from each other. Detecting this point provides us the time delay between $PP(RTT)$ and also $PP(t_1)$, which is referred to as $t_1$. The processing of the signals is shown in FIG. 12. In the first section (upper), the Sam signal is shown without subtracting any PP, in the second section (middle), one can see the PP(RTT) signal that was yield by applying some phase and attenuation to the Ref signal and in the final section (below) subtraction of PP(RTT) signal from the Sam signal can be seen. The start of the signal can be seen at point number 93 and the return of the signal can be seen around point number 350.

In step 5, $PP(t_1)U(t - t_1)$ is determined. After finding $PP(t_1)U(t - t_1)$ and using $\Gamma_{01}$ and $t_1$, one can achieve the further traveling signals in the first layer, which are given by

$$PP(nt_1) = (\frac{\Gamma_{10}}{T_{01}T_{10}})^{n-1} \times \left(PP(t_1)\right)^n U(t - nt_1)$$

Furthermore $\Gamma_{12}$ can also be determined.

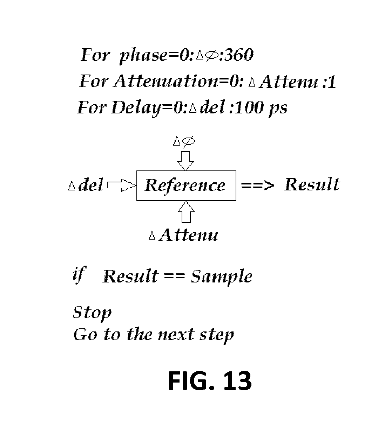

With all of $PP(t_1)U(t - t_1)$, $PP(2t_1)U(t - 2t_1)$, $PP(3t_1)U(t - 3t_1)$, ... detected, a further correlation can be performed between the signal Sam and the signal $\sum_{n \in N} PP(nt_1)U(t - nt_1) + PP(RTT)U(t)$ + Air. Based on this correlation, a further point $t_2$ can be found. $t_2$ corresponds with the new point where the above mentioned curves start to be separated from each other. It is to be noticed that the signal should again be corrected for attenuation ad phase. The correction algorithm is shown in FIG. 13

The corresponding corrected signal is named $PP(t_1 + t_2)U(t - (t_1 + t_2))$.

After finding $PP(t_1 + t_2)U(t - (t_1 + t_2))$, the following point $t_3$ can be determined based on the signal Air, $PP(RTT)U(t)$, $PP(t - nt_1)U(t - nt_1)$ and also $PP(t_1 + t_2)U(t - (t_1 + t_2))$, for finding $t_3$. $\Gamma_3$ can be calculated immediately based on $PP(t_1 + t_2)U(t - (t_1 + t_2))$. Furthermore, also following summations can be determined :

$$\sum_{n \in N} PP(nt_1 + t_2) \quad n \in N, n \geq 2 \text{ (3-28)}$$

$$\sum_{n \in N} PP(t_1 + nt_2) \quad n \in N, n \geq 2 \text{ (3-29)}$$

$$\sum_{n \in N} [PP(n(t_1 + t_2)) + PP(nt_1 + nt_2)] \quad n \in N, n \geq 2 \text{ (3-30)}$$

$$\sum_{n \in N} \sum_{m \in N} PP(mt_1 + nt_2) \quad n, m \in N, n, m > 2, n \neq m \text{ (3-31)}$$

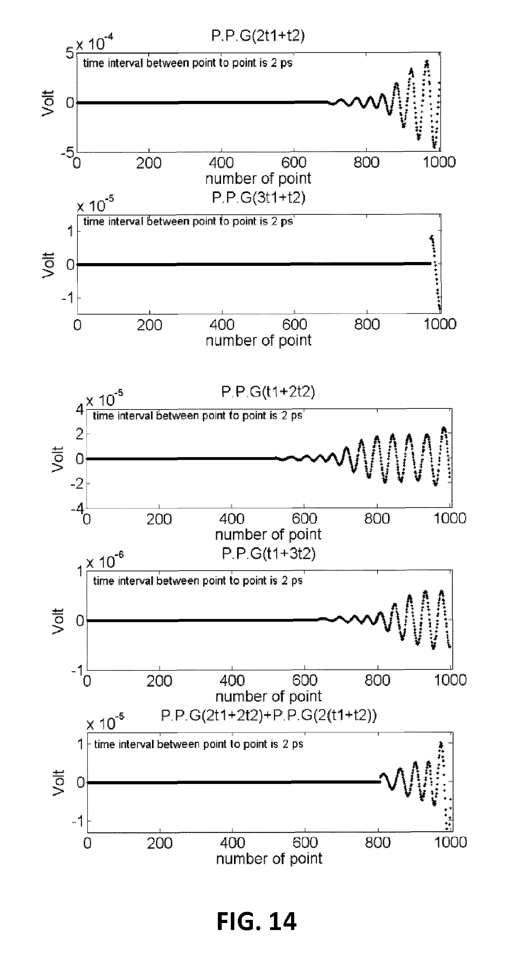

The resulting signals are shown in FIG. 14. It illustrates all of $PP(mt_1 + nt_2)$ located in the time.

In step 8, the thickness of the final layer is determined. Although this could be derived based on the earlier results including $t_3$ and also $\Gamma_{23}$, it is preferred to explicitly determine it, since this increases accuracy. All PP obtained in the previous step are now subtracted from the signal Sam. Then, $PP(t_1 + t_2 + t_3)$ is tracked. It is to be noticed that, while after finding $t_3$ in the above flowchart, the relative complex permittivity for third layer could be derived from $\Gamma_{23}$ and previous information, further calculation may be advantageous to decrease the error.

In a final step, the results for the relative permittivity and the thickness are determined based on the obtained values. In the table given below, the results as obtained with the current method are compared to the results of the real properties of the layers.

Table 2 : obtained results for a three-layer structure

|  | First layer | Second layer | Third layer |
|---|---|---|---|
| Relative permittivity which is obtained | 2.81+.14j | 1.13+.04j | 2.71+.10j |
| Relative permittivity | First layer= Third layer | 1.00+0.00j (air) | First layer= Third layer |
| Thickness(mm) which is obtained | 52.71 | 37.21 | 26.07 |
| Thickness(mm) | 50.04 | 30.11 | 20.08 |

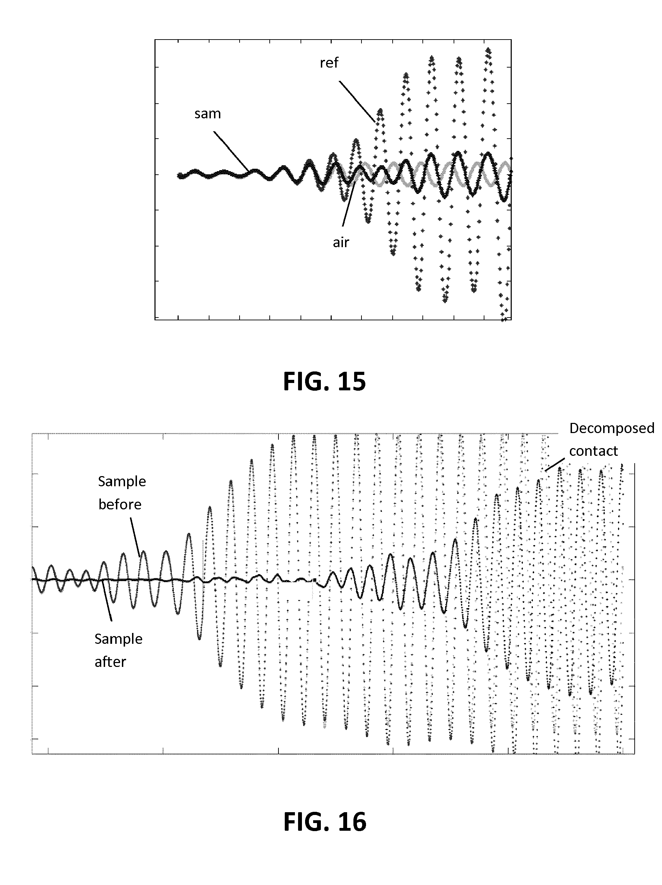

In one other particular example, the transient radar method is applied to a single layer structure. In the present example, a single thick PVE layer was monitored whereby the thickness of the layer is about 10.3cm. Similar as for the three layer structure, first the leakage, reflector and sample signal is captured. The signals can be captured and for example visualised on an oscilloscope. After capturing a smoothing process may be applied. In this way, processing can be performed on less noisy curves. One way of smoothing can be based on a histogram technique. In a next step, the signals are correlated with each other, so the nose of the signal can be identified. The latter is illustrated in FIG. 15, showing a part of the correlated signals.

After correlating and identifying the nose (which could be referred to as $t_0$), the air leakage is subtracted from the sample signal and the reference signal. This further allows to accurately see the nose.

The signal corrected for air leakage, also referred to as PP, is then subtracted from the sample signal. Further, the signal Air and PP can be combined with each other, and a new common point can be find where the signals Sam and Air+ $PP(RTT)$ start to be separated from each other, i.e. the point where the deviation starts occurring. Detecting this point provides us the time delay between PP and also $PP(t_1)$, which is referred to as $t_1$. The processing of the signals is shown in FIG. 16. The identification of $t_1$ also becomes clear when the signal $PP(t_1)$ is subtracted from the sample signal. The below table illustrates the delay in the signal and the corresponding phase and absolute coefficient of reflection, from which the film properties can be derived.

Table 3 : processed results for data obtained for a single layer

| Delay (point to point=4e-12 S) | Absolute of reflection coefficient | Phase (rad) |
| --- | --- | --- |
| 0 | 0.23 | 0.0628 |
| 282 | 0,129 | 0,9425 |

The resulting physical parameter, i.e. the thickness of the layer, can be derived therefrom and is illustrated in the table below, compared with the actual thickness of the layer.

Table 4 : geometric and EM properties derived for a single layer

| | Thickness(mm) (first layer) | Permittivity($\varepsilon_r$) |
| --- | --- | --- |
| Valid data | 103 | ? |
| Achieved data | 106.3 | 2.54 + 0.15i |

The examples illustrate that the transient radar method advantageously provides accurate information regarding the geometric and electromagnetic parameters of layers in a layer-based structure.

## Claims

1. A method for determining characteristics of a layer-based structure, the method comprising

   - irradiating the layer-based structure repetitively with a continuous wave electromagnetic radiation comprising a transient part,
   - capturing from the repetitive irradiating as a function of time a transient part of the reflection or transmission of the continuous wave electromagnetic radiation reflected or transmitted at the different interfaces of layer-based structure,
   - deriving from the transient part of the reflected or transmitted continuous wave electromagnetic radiation as function of time information regarding different contributions in the transient part of the reflected or transmitted continuous wave electromagnetic radiation stemming from the reflections or transmissions at different interfaces of the layer-based structure, and
   - determining from said information at least geometric information and/or electromagnetic properties of the different layers of the layer based structure.

2. A method for determining characteristics according to claim 1, wherein said deriving comprises the deconvolution of the transient part of the reflected or transmitted continuous wave electromagnetic radiation as function of time into different contributions in the transient part of the reflected or transmitted continuous wave electromagnetic radiation stemming from the reflections or transmissions at different interfaces of the layer-based structure.

3. A method for determining characteristics according to any of claims 1 or 2, wherein said deriving comprises identifying different moments in time corresponding to different contributions in the transient part of the reflected or transmitted continuous electromagnetic radiation wave stemming from the reflections or transmissions at different interfaces of the layer-based structure.

4. A method according to claim 3, wherein said determining from said information at least geometric information and/or electromagnetic properties comprises determining from said different moments in time at least geometric information regarding different layers of the layer-based structure.

5. A method according to any of the previous claims, wherein said irradiating is irradiating with electromagnetic radiation of substantially one frequency.

6. A method according to any of the previous claims, wherein said method furthermore comprises smoothing at least the reflected or transmitted continuous wave electromagnetic radiation.

7. A method according to any of the previous claims, wherein deriving from said information at least geometric information and/or electromagnetic comprises deriving a permittivity and/or permeability of the different layers.

8. A method according to any of the previous claims, wherein said irradiating comprises irradiating with electromagnetic radiation in the range 0.1 GHz to 10 THz.

9. A controller being programmed for performing a method characterization of a layer-based structure according to any of claims 1 to 8.

10. A system for characterizing a layer-based structure, the system comprising

- an irradiation source adapted for generating a repetitive continuous wave electromagnetic radiation comprising a transient part for repetitively irradiating the layer-based structure
- a receiver adapted for capturing from the repetitive irradiations as a function of time a transient part of the reflection or transmission of the continuous wave electromagnetic radiation reflected or transmitted at the different interfaces of the layer-based structure, and
- a processor programmed for deriving, from the transient part of the reflected or transmitted continuous wave electromagnetic radiation as function of time, information regarding different contributions in the transient part of the reflected or transmitted continuous wave electromagnetic radiation stemming from the reflections or transmissions at different interfaces of the layer-based structure, and for determining from said information at least geometric information and/or electromagnetic properties of the different layers of the layer based structure.

11. A system according to claim 10, wherein said processor comprises a deconvolution means for deconvolution of the transient part of the reflected or transmitted continuous wave electromagnetic radiation as function of time into different contributions in the transient part of the reflected or transmitted continuous wave electromagnetic radiation stemming from the reflections or transmissions at different interfaces of the layer-based structure.

12. A system according to any of claims 10 or 11, wherein the system comprises a single shot or multi-shot sampler for sampling the transient part of the reflected or transmitted continuous wave electromagnetic radiation at a frequency of at least the repetition frequency of the emitted radiation.

13. A system according to any of claims 10 to 12, wherein the irradiation source is adapted for generating a continuous wave electromagnetic radiation at a single frequency.

14. A computer program product for, when executed on a processor, determining characteristics of a layer-based structure, the computer program product being programmed for

- receiving information of a repetitive irradiation of the layer-based structure with a continuous wave electromagnetic radiation comprising a transient part,
- receiving information of the capturing as a function of time of a transient part of the reflection or transmission of the continuous wave electromagnetic radiation reflected or transmitted at the different interfaces of the layer-based structure,
- the computer program product furthermore being programmed for deriving from the transient part of the reflected or transmitted continuous wave electromagnetic radiation as function of time, information regarding different contributions in the transient part of the reflected or transmitted continuous wave electromagnetic radiation stemming from the reflections of transmissions at different interfaces of the layer-based structure, and for determining from said information at least geometric information and/or electromagnetic properties of the different layers of the layer based structure.

15. A data carrier comprising a computer program product according to claim 14 encoded thereon.

|  | First layer | Second layer | Third layer |
|---|---|---|---|
| thickness | d1 | d2 | d3 |
| permeability | μ1 | μ2 | μ3 |
| permittivity | ξ1 | ξ2 | ξ3 |
| conductivity | σ1 | σ2 | σ3 |

# FIG 1

First boundary    Second    Third    Fourth

d1    d2    d3

PP (RTT)

PP(t₁)

PP(2t₁)

PP(t₁+t₂)

PP(3t₁)

PP(2t₁+t₂)

PP(t₁+2t₂)

PP(t₁+t₂+t₃)

PP(4t₁)

# FIG. 2

Transient time   Steady state mode

Nose of signal

$t_0$

t

## FIG. 3

110

120

130

100

## FIG. 4

EP 3 106 861 A1

**FIG. 5**

**FIG.6**

20

Thicknesses and relative complex permittivity for three layer structures

⇩

Finding nose (t0)

⇩

Finding PP(RTT) ⇨

For phase=0:△φ:360
For Attenuation=0: △Attenu :1

△φ
⇩

Reference ==> Result

⇧
△Attenu

if Result == Sample

Stop
Go to the next step

⇩

$\Gamma_{01}$

⇩

Compare Air+ PP(RTT) and Sam for finding t1

⇩

Finding PP(t1)

⇩

For phase=0:△φ:360
For Attenuation=0: △Attenu :1
For Delay=0: △t :100△t

△φ
⇩

△t ⇨ Reference ==> Result

⇧
△Attenu

if Result == Sample

Stop
Go to the next step

$\Gamma_{12}$

⇩

Calculation all of PP(nt1) and subtract from the Sam without Air

⇩

Compare Air+ PP(RTT)+ PP(nt1) and Sam for finding t2

⇩

Finding PP(t1+t2)

⇩

$\Gamma_{23}$

⇩

Calculation all of PP(nt1+mt2) and subtract from the Sam without Air

⇩

Compare Air+ PP(RTT)+ PP(nt1)+ PP(nt1+mt2) and Sam for finding t3

⇩

Finding PP(t1+t2+t3)

⇩

$\Gamma_{30}$

# FIG. 7

**FIG. 8**

Corresponding three curves on each other

sam    ref

air

Volt

Number of points

**FIG. 9**

FIG. 10

For  phase=0:△∅:360
For Attenuation=0: △ Attenu :1

△∅
⇩
| Reference | ==> Result
⇧
△ Attenu

if   Result == Sample

Stop
Go to the next step

FIG. 11

**FIG. 12**

24

*For phase=0:△∅:360*
*For Attenuation=0: △ Attenu :1*
*For Delay=0:△ del :100 ps*

△∅
⇩

△*del* ⇨ | *Reference* | ==> *Result*

⇧
△*Attenu*

*if Result == Sample*

*Stop*
*Go to the next step*

# FIG. 13

FIG. 14

**FIG. 15**

**FIG. 16**

**FIG. 17**

$$tR + tS.min = TRT.mat$$

**FIG. 18**

Europäisches
Patentamt

European
Patent Office

Office européen
des brevets

# EUROPEAN SEARCH REPORT

Application Number

EP 15 17 3035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID J. COOK ET AL: "Accuracy and linearity of time-domain THz paint thickness measurements", PROCEEDINGS OF SPIE, vol. 6893, 6 February 2008 (2008-02-06), page 68930H, XP055217855, ISSN: 0277-786X, DOI: 10.1117/12.763900 * chapters 1. and 2.; figures 1, 2 * | 1-4,7,8, 10,11, 14,15 | INV. G01N22/00 G01N21/3581 |
| X | WO 2014/153263 A1 (TROXLER ROBERT ERNEST [US]) 25 September 2014 (2014-09-25) * paragraph [0006] - paragraph [0010] * * paragraph [0034] - paragraph [0036]; figures 1,2 * * paragraph [0052] - paragraph [0068]; figures 5-8 * | 1-4,8, 10,11, 13-15 | |
| X | J. HAUCK ET AL: "Terahertz inline wall thickness monitoring system for plastic pipe extrusion", AIP CONFERENCE PROCEEDINGS, 2014, pages 86-89, XP055155617, ISSN: 0094-243X, DOI: 10.1063/1.4873740 * abstract; chapter Results and Discussion; figures 1-6 * | 1,8,10, 14,15 | TECHNICAL FIELDS SEARCHED (IPC) G01N |

-/--

The present search report has been drawn up for all claims

| Place of search | Date of completion of the search | Examiner |
|---|---|---|
| The Hague | 1 December 2015 | Pagels, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 17 3035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STANZE DENNIS ET AL: "Multilayer Thickness Determination Using Continuous Wave THz Spectroscopy", IEEE TRANSACTIONS ON TERAHERTZ SCIENCE AND TECHNOLOGY, IEEE, PISCATAWAY, NJ, USA, vol. 4, no. 6, November 2014 (2014-11), pages 696-701, XP011563146, ISSN: 2156-342X, DOI: 10.1109/TTHZ.2014.2348414 [retrieved on 2014-10-30] * the whole document, in particular introduction * | 1-15 | |
| A | US 2012/228507 A1 (RAHMAN ANIS [US] ET AL) 13 September 2012 (2012-09-13) * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 1 December 2015 | Pagels, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 3035

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2015

| Patent document cited in search report | Publication date | Patent family member(s) | Publication date |
|---|---|---|---|
| WO 2014153263 A1 | 25-09-2014 | US 2015268218 A1<br>WO 2014153263 A1 | 24-09-2015<br>25-09-2014 |
| US 2012228507 A1 | 13-09-2012 | US 2012228507 A1<br>US 2014103215 A1 | 13-09-2012<br>17-04-2014 |

EPO FORM P0459

For more details about this annex : see Official Journal of the European Patent Office, No. 12/82